# EUROPÄISCHE PATENTSCHRIFT

(11) **EP 2 982 021 B1**
(45) Veröffentlichungstag und Bekanntmachung des Hinweises auf die Patenterteilung: **14.12.2016**
(21) Anmeldenummer: 14724365.3
(22) Anmeldetag: 06.05.2014
(51) Int. Cl.: H02K 1/20, H02K 5/20

(54) **ELEKTROMOTOR**
HOUSING FOR AN ELECTRIC MOTOR
CARTER POUR UN MOTEUR ÉLECTRIQUE

(30) Priorität: 14.05.2013 EP 13167613
(43) Veröffentlichungstag der Anmeldung: 10.02.2016
(73) Patentinhaber: Siemens Aktiengesellschaft, 80333 München (DE)
(72) Erfinder: KOCH, Thomas, 90459 Nürnberg (DE); GRILLENBERGER, Reiner, 91575 Windsbach (DE)
(86) Internationale Anmeldenummer: PCT/EP2014/059146
(87) Internationale Veröffentlichungsnummer: WO 2014/184040

(56) Entgegenhaltungen:
- EP-A1- 0 072 999
- WO-A2-2012/159661
- US-A1- 2012 062 057

## Beschreibung

Die Erfindung betrifft einen Elektromotor mit einem Stator, einem Läufer und einem Innen-Kühlkreislauf für den Läufer, umfassend ein Gehäuse mit einer im Wesentlichen zylindermantelförmigen Ummantelung, wobei in die Ummantelung eine sich bezüglich des Zylinders in axialer Richtung erstreckende, nach außen gerichtete Aussparung eingebracht ist.

Elektromotoren dienen der Erzeugung mechanischer, üblicherweise rotatorischer Energie aus Elektrizität. In Elektromotoren wird die Kraft, die von einem Magnetfeld auf die stromdurchflossenen Leiter einer Spule ausgeübt wird, in Bewegung umgesetzt. Sie umfassen dazu einen statischen Ständer und einen darin rotierenden, in entsprechenden Lagern gelagerten Läufer. Die Spulenwicklungen können dabei entweder auf dem Läufer angeordnet sein, oder - bei Elektromotoren mit innen liegenden Permanentmagneten - auf dem Stator.

Hochausgenutzte Elektromotoren, insbesondere der letzteren Bauart, werden heute wassergekühlt ausgeführt, da die entstehenden Wärmeverluste bei der Schutzart IP55 (geschützt gegen schädigende Staubmenge, vollständiger Schutz gegen Berührung, Schutz gegen Strahlwasser aus beliebigem Winkel) und höher nur durch eine intensive Wasserkühlung abgeführt werden können. Die Verluste entstehen sowohl im Ständer als auch im Läufer.

Bei Motorkonzepten ohne zusätzlichen Innenkühlkreislauf begrenzt dabei in der Regel die maximal zulässige Läufer- oder Lagertemperatur die maximale Ausnutzung der Maschine. Um die-se Begrenzung zu vermeiden, wird bei vielen Motorkonzepten versucht, einen Innenkühlkreislauf durch einfache Lüfter Flügel oder durch einen separaten Innenlüfter/Wellenlüfter zu realisieren. Dies bedeutet üblicherweise jedoch einen erheb¬lichen konstruktiven Aufwand und führt zu sehr teuren und komplexen Ständergehäusen, da die Integration zusätzlicher Luftkanäle für die Läuferluft je nach Kühlkonzept aufwändig ist.

Verbreitet sind beispielsweise Motoren mit Wassermantelgehäuse, bei denen ein Stahlgehäuse aus zwei Teilen gefertigt wird, wobei die beiden Teile miteinander verschweißt werden. Das Stahlgehäuse besteht aus einem inneren Zylinder, auf dem Stege für die Wasserführung aufgeschweißt oder eingearbeitet werden, und einem äußeren Zylinder. Das Wasser fließt also zwischen dem inneren und dem äußeren Zylinder. Bei einem derartigen Gehäuse ist es möglich, außen zusätzliche Kanäle für den Innenkühlkreislauf anzubringen, dies führt jedoch zu deutlichen Mehraufwendungen bei der Herstellung. Zudem hat ein doppelwandiges Konzept weitere Nachteile, wie beispielsweise das Erfordernis der Herstellung aus Stahl, da Gusskonstruktionen nicht dicht sind, die Verringerung des Aktivvolumens und die mangelnde Flexibilität hinsichtlich der Anordnung des Klemmenkastens, da hierfür eine separate Stahlkonstruktion (Kabelkanal) erforderlich ist.

Andere Kühlkonzepte verwenden Aufsetzkühler, wodurch die Motoren aber nicht kompakt ausgeführt werden können, oder Kühlrohre aus Edelstahl, die im Blechpaket verlegt werden. Die Ausführung mit Kühlrohren kann dabei sowohl bei gehäuselosen Motoren als auch bei Motoren mit einfachen Gehäusen zur Anwendung kommen. Allerdings erlauben derartige Kühlkonzepte eine Integration eines Innenkühlkreislaufs nur mit erheblichem Aufwand.

Aus der EP 0 072 999 A1 und der US 2012/062057 A1 ist bekannt, dass in die Ummantelung eine sich bezüglich des Zylinders in axialer Richtung erstreckende, nach außen gerichtete Aussparung eingebracht sein kann. Die US 2012/062057 A1 zeigt beispielsweise in der FIG. 10 ein Kühlkonzept mit einem Aufsetzkühler, mit dem die Luft eines Kühlkreislaufes für den Läufer gekühlt wird. Elektromotoren mit unterschiedlichen Kühlkonzepten sind beispielsweise aus der WO 2012/159661 A2 bekannt.

Es ist nunmehr Aufgabe der Erfindung einen Elektromotor der eingangs genannten Art anzugeben, welches eine technisch besonders einfache Integration eines Innenkühlkreislaufs für den Läufer erlaubt.

Diese Aufgabe wird erfindungsgemäß gelöst, indem innerhalb des Gehäuses ein hohlzylinderförmiges Ständerblechpaket mit auf der Außenseite angeordneten, Nuten angeordnet ist, wobei in den Nuten Kühlleitungen angeordnet sind, und wobei das Ständerblechpaket auf der Außenseite angeordnete, in axialer Richtung erstreckte Vertiefungen aufweist, die Teil eines InnenKühlkreislaufs für den Läufer sind. Die Erfindung geht dabei von der Überlegung aus, dass eine besonders einfache Innenkühlung durch die Integration von Kühlwegen für Kühlluft in das Gehäuse realisiert werden kann. Um dies besonders einfach zu realisieren, werden die Kühlwege als Aussparungen in der Ummantelung realisiert, nach außen gerichtet sind und sich entlang der axialen Richtung erstrecken. Da das Gehäuse den Ständer umschließt und die Aussparungen direkt an den Ständer des Elektromotors grenzen, ergibt sich somit eine effektive Fläche für Kühlluft zur Kühlung der innerhalb des Gehäuses liegenden Bauteile. Durch die axiale Erstreckung der Aussparungen sind diese von den axialen Enden des Gehäuses aus einfach erreichbar und können so in einen entsprechenden Kühlkreislauf integriert werden.

Dabei umfasst der Elektromotor weiterhin ein innerhalb des Gehäuses angeordnetes, hohlzylinderförmiges Ständerblechpaket mit auf der Außenseite angeordneten Nuten, wobei in den Nuten Kühlleitungen angeordnet sind. Durch eine derartige Konzeption des Ständerblechpakets wird einerseits das Ständerblechpaket effektiv gekühlt, andererseits grenzen die Kühlleitungen direkt an die Aussparungen und ermöglichen so einen besonders effektiven Wärmeaustausch mit.

Weiterhin umfasst das Ständerblechpaket auf der Außenseite angeordnete Vertiefungen, die Teil eines Innen-Kühlkreislaufs für den Läufer sind. Damit besteht einerseits eine Wärmeübertragung von den Aussparungen im Gehäuse zu den in den Nuten verlegten Kühlleitungen, die sich mäanderförmig durch das Ständerblechpaket zur Kühlung des Ständers winden, und andererseits zu den Vertiefungen zur Kühlung des Läufers. Wird Kühlluft durch die Aussparungen geleitet, die an den Öffnungen in den Deckplatten zu- bzw. abgeführt wird, wird sowohl der Ständer über die Kühlleitungen als auch der Läufer über die Vertiefungen mit dem daran angeschlossenen Innenkühlkreislauf effektiv gekühlt. Hierdurch wird in besonders einfacher Weise eine Innenkühlung für den Läufer erreicht.

Vorteilhafterweise sind dabei mehrere gleichartige Aussparungen in Umfangsrichtung verteilt eingebracht. Hierdurch wird die Fläche für den Wärmeaustausch weiter vergrößert und damit die Kühlwirkung verbessert. Zudem wird eine gleichmäßige Wärmeübertragung entlang des gesamten Umfangs des Gehäuses erreicht.

In besonders einfacher Ausgestaltung sind vier Aussparungen in regelmäßigem Abstand eingebracht. Die vier Aussparungen bilden in einer radial-azimutalen Schnittfläche somit ein Quadrat.

In zusätzlicher oder alternativer vorteilhafter Ausgestaltung umfasst das Gehäuse einen axialen Endbereich mit zwei Ecken, die durch eine gerade Kante verbunden sind, die in radialer Richtung jenseits des Umfangs des Zylinders angeordnet ist. Mit anderen Worten: Das grundsätzlich zylinderförmige Gehäuse geht in seinem axialen Endbereich in eine eckige Form über. Da sich die Kante über den Umfang des Zylinders hinaus in radialer Richtung erstreckt, kann sie direkt als Aufstellkante oder zur Befestigung von Standfüßen des Gehäuses genutzt werden. Hierdurch ermöglicht das Gehäuse eine besonders einfache Montage am Einsatzort.

In besonders einfacher vorteilhafter Ausgestaltung der axiale Endbereich im Querschnitt im Wesentlichen quadratisch und schließt den Umfang des Zylinders ein. Eine quadratische Form des den Gehäusezylinder an den beiden axialen Enden abschließenden Teils ist vergleichsweise einfach herzustellen und bietet außerdem zusätzlichen Raum für die Anbringung von Hilfsklemmenkästen oder Monitoring-Geräten.

In vorteilhafter Ausgestaltung ist das Gehäuse durch Gießen hergestellt. Dies ermöglicht eine deutlich kostengünstigere und einfachere Herstellung als eine Konstruktion aus Stahl. Der beschriebene einfache Aufbau ohne doppelwandigen Zylindermantel für die Außenkühlung macht eine einfache Gusskonstruktion möglich.

Die jeweilige Nut ist dabei vorteilhafterweise als Klammernut ausgestaltet, d. h. die Öffnung der Nut ist schmaler als ihr Innenraum, so dass die Kühlleitung eingepresst werden können und anschließend formschlüssig in der Nut gehalten werden. Dies ermöglicht eine einfache Montage des Elektromotors.

In weiterer vorteilhafter Ausgestaltung umfasst der Elektromotor einen Aufsetzkühler. Das beschriebene Motorkonzept ermöglicht in einfacher Weise die Nutzung eines Aufsetzkühlers, der an die Öffnungen in den Deckplatten angeschlossen und als Luft/Luft- oder Luft/Wasser-Wärmetauscher ausgebildet sein kann. Der Aufsetzkühler kann in einfacher Weise an die in den Deckplatten angeordneten Öffnungen angeschlossen werden.

Die mit der Erfindung erzielten Vorteile bestehen insbesondere darin, dass durch die Einbringung von axialen Aussparungen in der einwandigen Ummantelung eines Elektromotors bei einer Nutzung von Kühlleitungen und insbesondere Vertiefungen im Ständerblechpaket eine besonders einfache Integration eines Innenkühlkreislaufs für den Läufer des Elektromotors erreicht wird. Das Konzept kann für Hoch- und Niederspannungsmotoren, für Runddraht- als auch Flachdrahtwicklungen verwendet werden. Die Kühlleitungen können sehr einfach in das Ständerblechpacket eingeklickt und für eine bessere Wärmeübertragung zusätzlich verpresst oder vergossen werden. Sie können aufgrund der einfachen mäanderförmigen Ausgestaltung vorgefertigt werden, so dass eine kostengünstige Montage möglich wird, und können sowohl in Reihe als auch parallel geschaltet werden. Das Motorkonzept ermöglicht eine flexible Anordnung des Klemmenkastens an beiden axialen Enden, wobei auch vergleichsweise viel Raum für die Anordnung von Monitoring-Geräten oder Hilfsklemmenkästen bleibt.

Ein Ausführungsbeispiel der Erfindung wird anhand einer Zeichnung näher erläutert. Darin zeigen:
- FIG 1: ein Gehäuse für einen Elektromotor mit innen angeordnetem Ständerblechpaket,
- FIG 2: das Gehäuse ohne Ständerblechpaket und Lagerschilde mit Ausbruch,
- FIG 3: Das Gehäuse mit Ständerblechpaket mit eingelegten Kühlleitungen und Lagerschilden mit Ausbruch,
- FIG 4: das Ständerblechpaket,
- FIG 5: das Gehäuse mit Ständerblechpaket mit eingelegten Kühlleitungen im radial-azimutalen Schnitt,
- FIG 6: das Gehäuse mit Aufsetzkühler, und
- FIG 7: eine in eine Nut eingepresste Kühlleitung.

Gleiche Teile sind in allen Figuren mit denselben Bezugszeichen versehen.

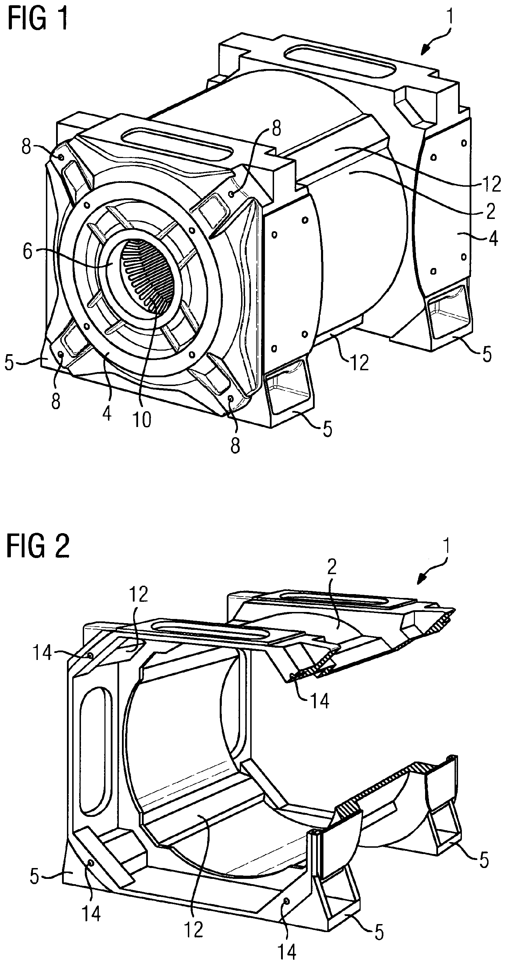

FIG 1 zeigt ein Gehäuse 1 für einen Elektromotor in der Aufsicht. Das Gehäuse 1 ist als Gussteil gefertigt, kann aber alternativ auch aus Stahl gefertigt sein. Es umfasst eine einwandige Ummantelung 2, die im Wesentlichen zylindermantelförmig ausgestaltet ist. An den axialen Enden des Zylinders sind Lagerschilde 4 angeordnet, die Deck- bzw. Grundfläche des Zylinders bilden. In den axialen Randbereichen geht die Ummantelung 2 in eine quadratische Form über, um eine Befestigung der Lagerschilde 4 zu ermöglichen. Die Seitenlänge der im Querschnitt quadratischen axialen Endbereiche übersteigt dabei den Umfang des Zylinders der Ummantelung.

Eine Seitenfläche des axialen Endbereichs bildet dabei eine Aufstellkante, auf der das Gehäuse aufgestellt wird. Hierzu sind zusätzlich auf der Unterseite im Bereich der beidseitigen Kanten vier Standfüße 5 vorgesehen. Die Lagerschilde 4 umfassen eine zentrale, kreisförmige Öffnung 6 zur Lagerung des nicht gezeigten Läufers des Elektromotors. Im Bereich der Ecken der Lagerschilde 4 sind jeweils Befestigungsöffnungen 8 angeordnet, mit denen die Lagerschilde 4 fixiert werden. Durch die zentrale Öffnung 6 ist das Ständerblechpaket 10 zu sehen, welches im Folgenden noch detailliert erläutert wird.

Das Gehäuse 1 umfasst vier sich in radialer Richtung nach außen wölbende Aussparungen 12 im zylinderförmigen Teil, die sich axialer Richtung gerade erstrecken. Die Aussparungen 12 sind gleich ausgestaltet und enden jeweils im Bereich der Ecken der Lagerschilde 4 bzw. der axialen Endbereiche des Gehäuses 1.

FIG 2 zeigt das Gehäuse 1 ohne Ständerblechpaket 10 und Lagerschilde 4 aus gleicher Blickrichtung wie FIG 1, wobei auf der rechten Seite der FIG 2 ein Teil des Gehäuses 1 ausgebrochen ist. FIG 2 zeigt den Übergang des Gehäuses 1 von der zylindrischen zur quadratischen Querschnittsform zu den axialen Enden hin. In den Ecken an den axialen Enden sind Öffnungen 14 eingebracht.

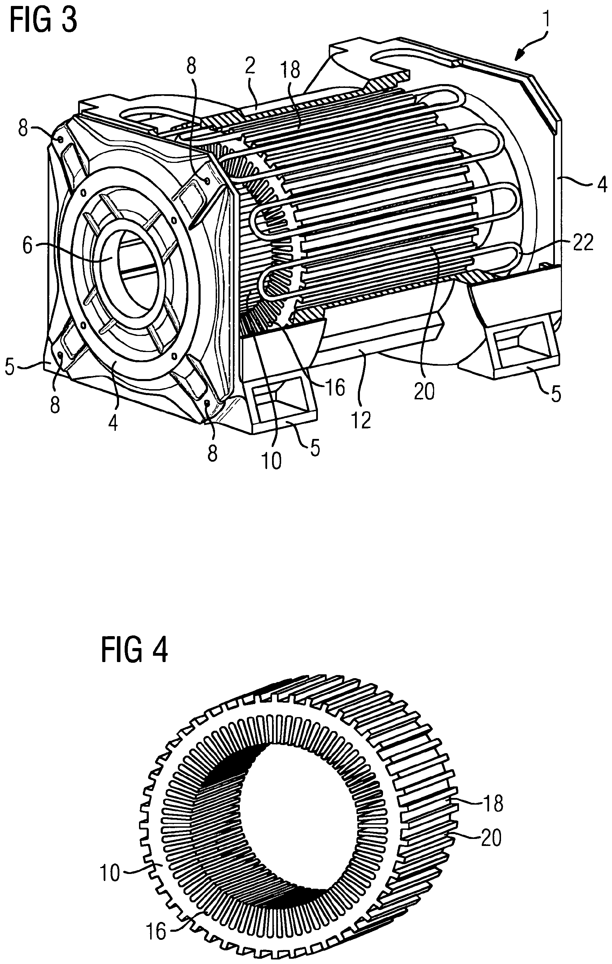

FIG 3 zeigt das Gehäuse 1 mit Ständerblechpaket 10 und Lagerschilden 4, wobei auf der rechten Seite der FIG 3 ebenfalls ein Teil des Gehäuses 1 ausgebrochen ist und den Blick auf das Ständerblechpaket 10 freigibt. Das Ständerblechpaket 10 ist im Wesentlichen hohlzylinderförmig aufgebaut und weist auf der Innenseite Nuten 16 für Drahtwicklungen des Ständers auf. Der Elektromotor ist demnach für innenliegende Permanentmagneten oder Asynchronläufer ausgestaltet.

Weiterhin weist das Ständerblechpaket 10 auf der Außenseite in axialer Richtung erstreckte Nuten 18 und Vertiefungen 20 auf. Die Nuten 18 sind als Klammernuten ausgebildet, in die Kühlleitungen 22 eingebracht sind, in denen Kühlwasser geführt wird. Die Kühlleitungen 22 sind aus Edelstahl, Kupfer oder Aluminium gefertigt. Die Kühlleitungen 22 erstrecken sich entlang einer Nut 18, bis sich nach dem axialen Austritt aus dem Ständerblechpaket 10 ein halbkreisförmiges Stück anschließt, das wieder in eine weitere Nut 18 mündet. Dadurch winden die Kühlleitungen 22 sich mäanderförmig um das Ständerblechpaket 10. Die Vertiefungen 20 sind Teil eines nicht näher dargestellten Kühlkreislaufs für den Läufer.

Die Funktionsweise der Kühlung wird im Folgenden erläutert: Kühlluft wird in die Aussparungen 12 geführt. Die Aussparungen 12 grenzen unmittelbar an das Ständerblechpaket 10 und stehen teilweise auch in direktem Kontakt zu den Kühlleitungen 22 und den Vertiefungen 20. Somit wird das Kühlwasser in den Kühlleitungen 22 zur Kühlung des Ständers gekühlt. Die Vertiefungen 20 stehen teilweise direkt in Kontakt mit den Aussparungen 12, teilweise erfolgt ein Wärmeaustausch über das Ständerblechpaket 10. Da die Vertiefungen 20 Teile eines Kühlkreislaufs für den Läufer sind, wird so auch eine effektive Kühlung des Läufers erreicht.

FIG 4 zeigt das Ständerblechpaket 10 in der Aufsicht mit den Nuten 16 auf der Innenseite für die Drahtwicklungen, den Nuten 18 auf der Außenseite für die Kühlleitungen 22 und den Vertiefungen 20 auf der Außenseite für den Innenkühlkreislauf des Läufers.

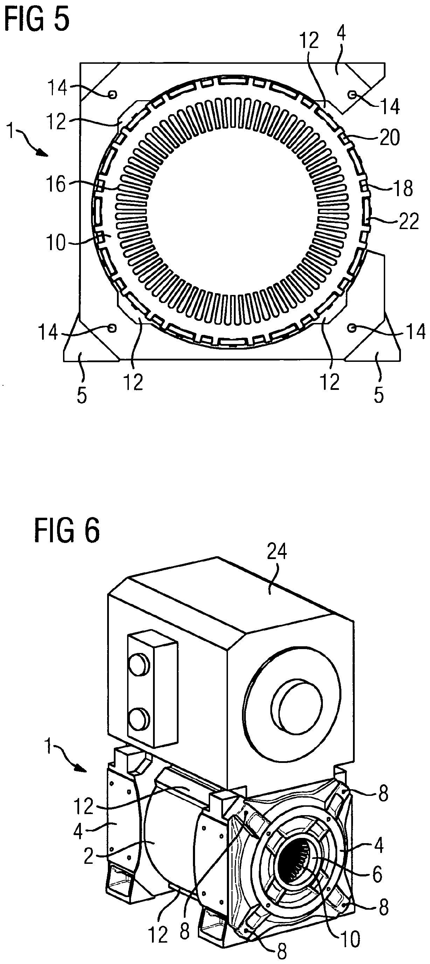

FIG 5 zeigt das Gehäuse 1 mit Ständerblechpaket 10 mit eingelegten Kühlleitungen 22 im radial-azimutalen Schnitt im axialen, quadratischen Endbereich. Hierbei ist auf der rechten Seite wiederum ein Teil des Gehäuses 1 ausgebrochen. FIG 5 zeigt noch einmal die Lage des Ständerblechpakets 10 bündig im zylindrischen Teil der Ummantelung 2, sowie den Kontakt der Aussparungen 12 in der Ummantelung 2 zu den Kühlleitungen 22 und Vertiefungen 20 im Blechpaket.

FIG 6 zeigt eine Aufsicht des Gehäuses 1 mit darauf angeordnetem Aufsetzkühler 24. Der Aufsetzkühler 24 hat etwa dieselben Abmessungen wie das Gehäuse 1 und ist auf dieses aufgesetzt. Der Aufsetzkühler 24 ist als Luft/Luft- oder Luft/ Wasser-Wärmetauscher ausgelegt.

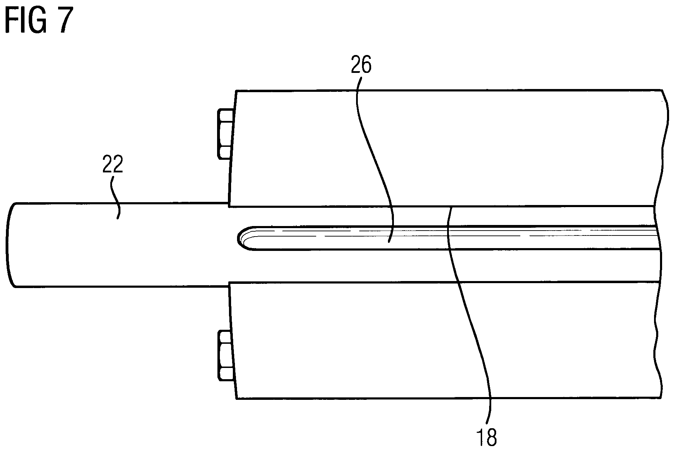

FIG 7 zeigt beispielhaft die Befestigung einer Kühlleitung 22 in einer Nut 18. Die Nut 18 ist als Klammernut ausgestaltet und verjüngt sich somit zu ihrem Austritt hin. Die Nut 18 weist somit eine Öffnung auf, die durch eine Engstelle der Nut 18 gebildet wird. Die Kühlleitung 22, die einen größeren Durchmesser als eine Breite der Öffnung in Umfangsrichtung aufweist, wird durch die Engstelle in die Nut 18 eingepresst. Für eine bessere Wärmeübertragung zwischen dem Ständerblechpaket 10 und der Kühlleitung 22 wirkt beim Einpressen der Kühlleitungen 22 eine große Kraft auf die Kühlleitung 22. Dabei wird die Kühlleitung 22 auf der Seite verformt, die dem Austritt der Nut 18 zugewandt ist, so dass eine entlang der Haupterstreckungsrichtung der Kühlleitung 22 verlaufende Nut 26 eingepresst vorhanden ist.

## Patentansprüche

1. Elektromotor mit einem Stator, einem Läufer und einem Innenkühlkreislauf für den Läufer, umfassend ein Gehäuse (1) mit einer im Wesentlichen zylindermantelförmige Ummantelung (2), wobei in die Ummantelung (2) eine sich bezüglich des Zylinders in axialer Richtung erstreckende, nach außen gerichtete Aussparung (12) eingebracht ist, wobei innerhalb des Gehäuses (1) ein hohlzylinderförmiges Ständerblechpaket (10) angeordnet ist, wobei das Ständerblechpaket (10) auf der Außenseite angeordnete, in axialer Richtung erstreckte Vertiefungen (20) aufweist,
**dadurch gekennzeichnet,**
**dass** auf der Außenseite des Ständerblechpakets Nuten (18) angeordnet sind, wobei in den Nuten Kühlleitungen (22) angeordnet sind und
**dass** die in axialer Richtung erstreckten Vertiefungen (20) Teil des Innenkühlkreislaufs für den Läufer sind.

2. Elektromotor nach Anspruch 1, in dessen Gehäuse (1) mehrere gleichartige Aussparungen (12) in Umfangsrichtung verteilt eingebracht sind.

3. Elektromotor nach Anspruch 2, in dessen Gehäuse (1) vier Aussparungen (12) in regelmäßigem Abstand eingebracht sind.

4. Elektromotor nach Anspruch 2 oder 3, dessen Gehäuse (1) einen axialen Endbereich mit zwei Ecken umfasst, die durch eine gerade Kante verbunden sind, die in radialer Richtung jenseits des Umfangs des Zylinders angeordnet ist.

5. Elektromotor nach Anspruch 3 und 4, bei dem der axiale Endbereich im Querschnitt im Wesentlichen quadratisch ist und den Umfang des Zylinders einschließt.

6. Elektromotor nach einem der vorhergehenden Ansprüche, dessen Gehäuse (1) durch Gießen hergestellt ist.

7. Elektromotor nach einem der vorhergehenden Ansprüche, bei dem die jeweilige Nut (18) als Klammernut ausgestaltet ist.

8. Elektromotor nach einem der vorhergehenden Ansprüche, umfassend einen Aufsetzkühler (24).

## Claims

1. Electric motor with a stator, a rotor and an inner cooling circuit for the rotor, comprising a housing (1) with a substantially cylindrical-shell-shaped casing (2), wherein a cavity (12) directed outwards and extending in the axial direction in respect of the cylinder is introduced into the casing (2), wherein a hollow cylinder-shaped laminated stator core (10) is arranged within the housing (1), wherein the laminated stator core (10) has depressions (20) extending in the axial direction and arranged on the exterior,
**characterised in that**
grooves (18) are arranged on the exterior of the laminated stator core, wherein cooling lines (22) are arranged in the grooves and that the depressions (20) extending in the axial direction form part of the inner cooling circuit for the rotor.

2. Electric motor according to claim 1, in the housing (1) of which a number of similar cavities (12) are introduced distributed in the peripheral direction.

3. Electric motor according to claim 2, in the housing (1) of which are introduced four cavities (12) at regular intervals.

4. Electric motor according to claim 2 or 3, the housing (1) of which comprises an axial end region with two corners, which are connected by means of a straight edge, which is arranged in the radial direction across the periphery of the cylinder.

5. Electric motor according to claim 3 and 4, in which the axial end region is substantially cross-sectionally square and encloses the periphery of the cylinder.

6. Electric motor according to one of the preceding claims, the housing (1) of which is produced by means of casting.

7. Electric motor according to one of the preceding claims, in which the respective groove (18) is embodied as a clip groove.

8. Electric motor according to one of the preceding claims, comprising a slip-on heatsink (24).

## Revendications

1. Moteur électrique comprenant un stator, un rotor et un circuit de refroidissement intérieur du rotor, comprenant un carter (1) ayant une enveloppe (2) sensiblement en forme d'enveloppe cylindrique, un évidement (12), s'étendant par rapport au cylindre dans la direction axiale et dirigé vers l'extérieur, étant ménagé dans l'enveloppe (2), un paquet (10) de tôles statoriques en forme de cylindre creux étant disposé à l'intérieur du carter (1), le paquet (10) de tôles statoriques ayant des cavités (20) disposées du côté extérieur et s'étendant dans la direction axiale,
**caractérisé**
**en ce que** des encoches (18) sont disposées sur le côté extérieur du paquet de tôles statoriques, des conduits (22) de refroidissement étant disposés dans les encoches, et
**en ce que** des cavités (20), s'étendant dans la direction axiale, font partie du circuit de refroidissement intérieur du rotor.

2. Moteur électrique suivant la revendication 1, dans le carter (1) duquel sont ménagés, d'une manière répartie dans la direction périphérique, plusieurs évidements (12) de même type.

3. Moteur électrique suivant la revendication 2, dans le carter (1) duquel sont ménagés quatre évidements (12) à intervalles réguliers.

4. Moteur électrique suivant les revendications 2 ou 3, dont le carter (1) comprend une partie d'extrémité axiale ayant deux coins qui sont reliés par une arête droite, qui est disposée dans la direction radiale au-delà du pourtour du cylindre.

5. Moteur électrique suivant les revendications 3 et 4, dans lequel la partie d'extrémité axiale est en section transversale sensiblement carrée et enferme le pourtour du cylindre.

6. Moteur électrique suivant l'une des revendications précédentes, dont le carter (1) est fabriqué par coulée.

7. Moteur électrique suivant l'une des revendications précédentes, dans lequel l'encoche (18) respective est conformée en encoche de retenue.

8. Moteur électrique suivant l'une des revendications précédentes, comprenant un refroidisseur (24) adaptable.
